# EUROPEAN PATENT SPECIFICATION

(11) **EP 2 415 204 B1**
(45) Date of publication and mention of the grant of the patent: **19.08.2015**
(21) Application number: 09779251.9
(22) Date of filing: 02.04.2009
(51) Int. Cl.: H04L 12/14, H04L 29/06, H04M 15/00

(54) **CONTROL OF A COMMUNICATION SESSION**
STEUERUNG EINER KOMMUNIKATIONSSITZUNG
COMMANDE D'UNE SESSION DE COMMUNICATION

(43) Date of publication of application: 08.02.2012
(73) Proprietor: Telefonaktiebolaget L M Ericsson (publ), 164 83 Stockholm (SE)
(72) Inventor: MARIBLANCA NIEVES, David, E-28045 Madrid (ES)
(74) Representative: Lind, Robert
(86) International application number: PCT/EP2009/053979
(87) International publication number: WO 2010/112080

(56) References cited:
- US-A1- 2005 135 428
- US-A1- 2007 281 699
- 3GPP ORG: "3GPP TS 23.203 v7.5.0.3rd Generation Partnership Project; Technical Specification Group Services and System Aspects; Policy and charging control architecture (Release 7)" INTERNET CITATION 1 December 2007 (2007-12-01), XP002528291 [retrieved on 2007-12-01]
- "Digital cellular telecommunications system (Phase 2+); Universal Mobile Telecommunications System (UMTS); Telecommunication management; Charging management; Diameter charging applications (3GPP TS 32.299 version 7.7.0 Release 7); ETSI TS 132 299" ETSI STANDARDS, LIS, SOPHIA ANTIPOLIS CEDEX, FRANCE, vol. 3-SA5, no. V7.7.0, 1 October 2007 (2007-10-01), XP014040201 ISSN: 0000-0001

## Description

### Technical Field

The present invention relates to control of a communication session. More particularly, the invention relates to redirection of a communication session in response to online charging and policy decisions.

### Background

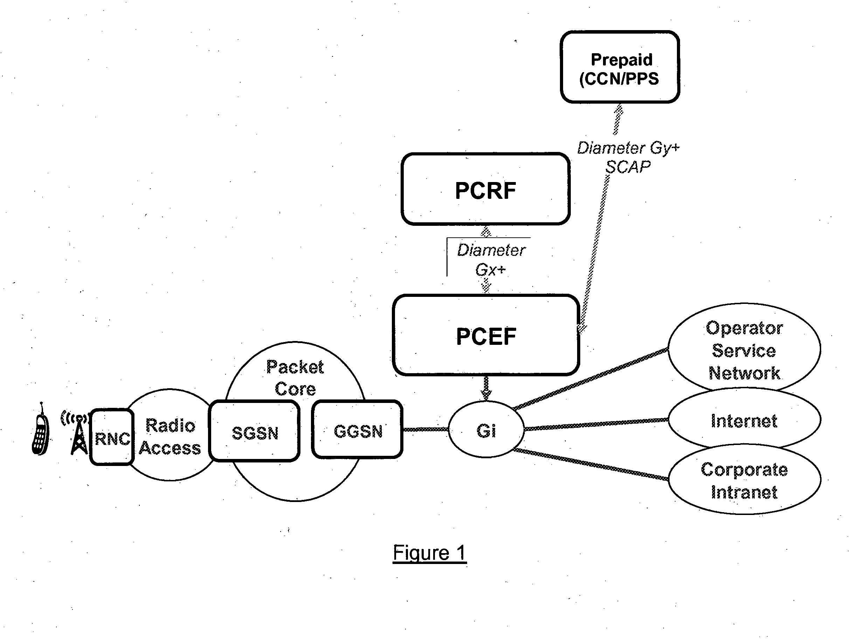

Telecommunications services provided over an IP Connectivity Access Network (IP-CAN) can be subject to online charging and/or policy control mechanisms. Accordingly, some telecommunications systems incorporate Policy and Charging Control (PCC) architectures to provide this control. 3GPP TS 23.203 V7.9.0 describes such a PCC architecture in respect of packet flows in an IP-CAN session established by a user terminal through a 3G telecommunications system. The PCC architecture described in 3GPP TS 23.203 comprises a Policy and Charging Enforcement Function (PCEF), a Policy and Charging Rules Function (PCRF) and an Online Charging System (OCS). Figure 1 illustrates schematically an example of PCC architecture employed in a General Packet Radio Service (GPRS) IP-CAN. Figure 1 depicts a Radio Network Controller (RNC) of a UMTS Terrestrial Radio Access Network (UTRAN); however, this could equally be a Base Station Subsystem (BSS) of any other radio access network (e.g. GSM EDGE Radio Access Network (GERAN)).

The PCEF is a functional entity that behaves as a Policy Enforcing Point (PEP) for enforcing decisions instructed by the PCRF and the OCS. The PCEF captures any user and signalling traffic, and analyzes that traffic to identify the user and to capture details of the service(s) being used. The PCEF can then communicate this information to the PCRF over the Gx interface and to the OCS over the Gy interface. The PCEF is preferably co-located within the gateway node implementing the IP access to the PDN. As such, in a GPRS core network the PCEF is located within the GPRS Gateway Support Node (GGSN), whilst in the case of a CDMA2000 network the PCEF may be located in a Packet Data Serving Node (PDSN).

The PCRF can be implemented as a standalone node and behaves as a Policy Decision Point (PDP), or Policy Server (PS), that stores user data related to QoS enforcement, access control lists, etc. The PCRF takes decisions based on the provisioned data and the user activity information it receives from PCEF. Once a decision is taken in PCRF, this decision is indicated to the PCEF by means of the Gx interface.

The OCS provides authorization for the usage of network resources based on the provisioned data and the user activity information it receives from PCEF. This authorization must be granted by the OCS prior to the actual resource usage. When receiving a network resource usage request, the network assembles the relevant charging information and generates a charging event towards the OCS in real-time. The OCS then returns an appropriate resource usage authorization over the Gy interface. The resource usage authorization may be limited in its scope (e.g. volume of data or duration) therefore this authorization may have to be renewed from time to time as long as the user's resource usage persists. The OCS can support time, volume and event-based charging.

When enforcing decisions received from the PCRF and/or the OCS, the PCEF may be required to terminate or modify an IP-CAN session. As an alternative or in addition to the termination or modification of a session, the PCEF can also direct the user towards an application specific web portal. These web portals can be used to provide additional services to the user, or merely to provide further information. For example, such a web portal can notify the user of a change in the QoS or, if the user's credit has been exhausted, the web portal can provide a mechanism for the user to purchase more credit.

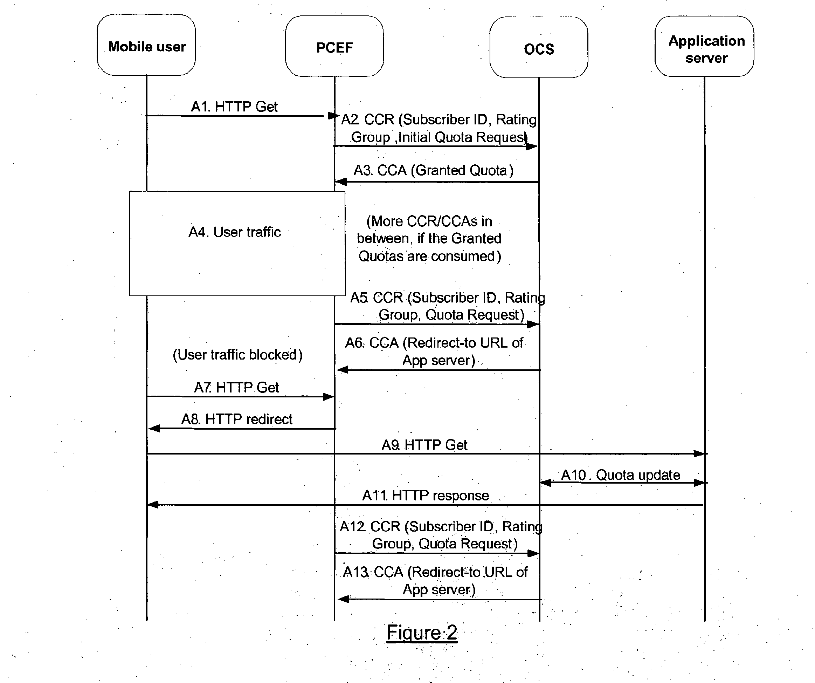

Figure 2 is an example signalling flow diagram of an OCS directing a user terminal to a web portal. In this example, during usage of some network resource, an OCS determines that the user's credit has been exhausted and directs the user terminal to a web portal that provides the user with the option of purchasing more credit. The steps performed are as follows:
A1. The PCEF detects the user's first attempt to access a particular service. For example, the PCEF receives a HTTP Get request from the user terminal.
A2. In accordance with the Diameter Credit-Control Application (as specified in IETF RFC 4006) the PCEF sends a Credit-Control-Request (CCR) message to the OCS requesting an initial credit authorization for the service.
A3. Provided the user has sufficient credit, the OCS responds to the CCR with a Credit-Control-Answer (CCA) message indicating the quota granted to the user. This quota can be given in any unit (e.g. time, data, money etc) depending upon the service and the user's subscription. The quota returned by the OCS in this initial CCA message usually only equates to a portion of the total units currently available to the user (e.g. a portion of the credit in the user's account).
A4. The PCEF then allows the user to access the service until the granted quota has been consumed. Once this quota has been used, the PCEF sends a further CCR to the OCS. Given that the quota returned by the OCS in the initial CCA message was only a portion of the available units, when the OCS receives a further CCR from the PCEF it responds with a further quota, thereby allowing the user to continue to use the service. These rounds of CCR and CCA messages continue until the OCS decides to terminate the session, for example, if the total units available to the user have been exhausted or the user's subscription has expired.
A5. At this point, when the PCEF requests another quota, the OCS can send a CCA message to the PCEF indicating that the PCEF should redirect the user terminal to a web portal, the message including the URL of the web portal. Alternatively, the OCS can simply send a CCA message to the PCEF indicating that the session should be terminated and the reasons for this decision.
A6. If the CCA message from the OCS included the URL of a web portal, when the user terminal then makes a further attempt to continue to use the service the PCEF responds with a message redirecting the user terminal to the URL of the web portal. Alternatively, if the CCA message received from the OCS does not include a URL, but does indicate that the session should be terminated and the reasons for this decision, then the PCEF can respond to the user terminal with a message redirecting the user terminal to a URL that has been configured locally at the PCEF.
A7. The user terminal then sends a HTTP Get request to the URL indicated to it by the PCEF. In this example, the URL redirects the user terminal to a web portal of the OCS that is hosted at a separate application server. The application server then communicates with both the OCS and the user terminal in order to allow the user to purchase more credit or update their subscription.
A8. Once this process has been completed the OCS can initiate re-authorisation of the session by sending a Re-Auth-Request (RAR) message to the PCEF. The PCEF will respond with a Re-Auth-Answer (RAA) message before sending a CCR message to the OCS requesting a new quota. The OCS then responds with a CCA message providing a quota from the additional credit purchased by the user. Alternatively, and as shown in Figure 2, the last CCA message sent from the OCS in step 5 prior to the redirection can include a "validity time". The PCEF will then run a timer that, upon expiration of this "validity time", triggers the sending of a CCR message to the OCS in order to re-start the credit authorisation process.

As described above, a PCRF may also require that a user terminal accessing a service be redirected to a web portal. For example, in some countries, due to legislation, the network operator is required to notify the user prior to a degradation of a service. This notification can be achieved by sending an email or SMS to the user; however, it may preferable that the user terminal is directed to a web portal that displays the relevant information to the user. As such, if a network operator was to lower the bandwidth or the Quality of Service (Qos) provided to a user, this would require that the user be notified prior to the degradation of service, and this notification could be achieved by directing the user terminal to a web portal displaying the relevant information.

"3GPP TS 23.203 v7.5.0.3rd Generation Partnership Project; Technical Specification Group Services and System Aspects; Policy and charging control architecture (Release 7) specifies the overall stage 2 level functionality for Policy and Charging Control that encompasses the following high level functions for IP-CANs:
- Flow Based Charging, including charging control and online credit control;
- Policy control (e.g. gating control, QoS control, etc.).

US - A - 2005/135428 discloses a gateway node and methods applicable for use in a communications network.

### Summary

According to a first aspect of the present invention there is provided a method of operating a Policy and Charging Enforcement Function to control a communication session of a user terminal. The method comprises receiving an initial decision from a first decision function, the initial decision requiring a redirection of a user interface of the user terminal to a primary address associated with the first decision function, notifying a second decision function of said initial decision, receiving a supplementary decision from the second decision function, the supplementary decision requiring that that the first decision function should communicate with a secondary address associated with the second decision function, and sending a redirection instruction to the user terminal to redirect the user interface to said primary address, the instruction including said secondary address.

The initial decision may include the primary address. Alternatively, the initial decision may indicate one or more reasons for the decision, and the method may then further comprise using said one or more reasons to determine that the redirection is required and to select said primary address. The primary address may be selected from a set of one or more addresses predefined at the Policy and Charging Enforcement Function.

The supplementary decision may include the secondary address. Alternatively, the supplementary decision may indicate one or more reasons for the decision, and the method may then further comprise using said one or more reasons to determine that the first decision function should communicate with a secondary address and to select said secondary address. The secondary address may be selected from a set of one or more addresses predefined at the Policy and Charging Enforcement Function.

The redirection instruction may include parameters for identifying the initial decision and the supplementary decision. The primary and secondary addresses may be respective primary and secondary Uniform Resource Locators. The communication session may be a web browsing session, and the user interface may be a web browser.

The first decision function may be provided by one of a Policy and Charging Rules Function and an Online Charging System and the second decision function may be provided by the other of a Policy and Charging Rules Function and an Online Charging System.

According to a second aspect of the present invention there is provided a method of operating a decision function to control a communication session of a user terminal. The method comprises using one or more predefined rules to make an initial decision relating to control of the communication session, the initial decision requiring a redirection of a user interface of the user terminal, sending said initial decision to a Policy and Charging Enforcement Function, receiving a data request from a user interface of the user terminal including an address associated with a further decision function, retrieving internal data, retrieving supplementary data from the further decision function using said address, combining said initial data and said supplementary data, and sending the combined data to the user interface of the user terminal.

The initial decision may include an address associated with the decision function. The initial decision may indicate one or more reasons for the initial decision. The data request may also include parameters for identifying the internal data and the supplementary data.

According to a third aspect of the present invention there is provided a method of operating a decision function to control a communication session of a user terminal. The method comprises receiving, from a Policy and Charging Enforcement Function, notification of an initial decision made by a further decision function, the initial decision requiring a redirection of a user interface of the user terminal, using one or more predefined rules to make a supplementary decision relating to control of the communication session, and sending the supplementary decision to the Policy and Charging Enforcement Function.

The supplementary decision may include an address associated with the decision function. The supplementary decision may indicate one or more reasons for the supplementary decision.

The decision function may be provided by one of a Policy and Charging Rules Function and an Online Charging System and the further decision function may be provided by the other of a Policy and Charging Rules Function and an Online Charging System.

According to a fourth aspect of the present invention there is provided an apparatus configured to operate as a Policy and Charging Enforcement Function. The apparatus comprises a receiver for receiving an initial decision from a first decision function, a processing unit for determining if the initial decision requires a redirection of a user interface of a user terminal to a primary address associated with the first decision function, a transmitter for notifying a second decision function of said initial decision, a receiver for receiving a supplementary decision from the second decision function, a processing unit for determining if the supplementary decision requires that that the first decision function should communicate with a secondary address associated with the second decision function, for generating a redirection instruction to redirect the user interface to the primary address, and, if the supplementary decision does require that that the first decision function should communicate with a secondary address, for including said secondary address in the instruction, and a transmitter for sending the redirection instruction to the user terminal. The Policy and Charging Enforcement Function may be a functional entity in a Gateway GPRS Support Node.

The processing unit may be arranged to determine if the initial decision includes the primary address. The processing unit may be arranged to determine if the initial decision indicates one or more reasons for the decision, and, if so, to use said one or more reasons to determine if the redirection is required and to select said primary address. In addition, the processing unit may be arranged to select the primary address from a set of one or more addresses predefined in a memory of the Policy and Charging Enforcement Function.

The processing unit may be arranged to determine if the supplementary decision includes the secondary address. The processing unit may be arranged to determine if the supplementary decision indicates one or more reasons for the decision, and, if so, to use said one or more reasons to determine if the first decision function should communicate with a secondary address and to select said secondary address. In addition, the processing unit may be arranged to select the secondary address from a set of one or more addresses predefined in a memory of the Policy and Charging Enforcement Function. The processing unit may also be arranged to include parameters for identifying the initial decision and the supplementary decision in the redirection instruction.

According to a fifth aspect of the present invention there is provided an apparatus configured to operate as a decision function for controlling a communication session of a user terminal. The apparatus comprising a memory unit for storing one or more predefined rules, a processing unit for using the one or more predefined rules to make an initial decision relating to control of the communication session, a memory unit for storing internal data relating to said initial decision, a transmitter for sending said initial decision to a Policy and Charging Enforcement Function, a receiver for receiving a data request from the user interface of the user terminal including an address associated with a further decision function, a processing unit for retrieving internal data from the memory unit, a transceiver for retrieving supplementary data from the further decision function using said address, a processing unit for combining said internal data and said supplementary data, and a transmitter for sending the combined data to the user interface of the user terminal. The decision function may be one of a Policy and Charging Rules Function and an Online Charging System, and the further decision function may be the other of a Policy and Charging Rules Function and an Online Charging System.

According to a sixth aspect of the present invention there is provided an apparatus configured to operate as a decision function for controlling a communication session of a user terminal. The apparatus comprises a receiver for receiving, from a Policy and Charging Enforcement Function, notification of an initial decision made by a further decision function, the initial decision requiring a redirection of a user interface of the user terminal, a memory unit for storing one or more predefined rules, a processing unit for using the one or more predefined rules to make a supplementary decision relating to control of the communication session, and a transmitter for sending the supplementary decision to the Policy and Charging Enforcement Function. The apparatus may further comprise a memory unit for storing data relating to said supplementary decision. The decision function may be one of a Policy and Charging Rules Function and an Online Charging System, and the further decision function may be the other of a Policy and Charging Rules Function and an Online Charging System.

### Brief Description of the Drawings

Figure 1 illustrates schematically an example of PCC architecture employed in a General Packet Radio Service (GPRS) IP-CAN;
Figure 2 is an example signalling flow diagram of an OCS directing a user terminal to a web portal;
Figure 3 illustrates schematically an example of the process of unifying a first redirection with a second redirection;
Figure 4 illustrates an example of the process implemented by a PCEF that supports unified redirection. The steps performed are as follows:
   Figure 5 illustrates an example of the process implemented by a first decision function that supports unified redirection;
   Figure 6 illustrates an example of the process implemented by a second decision function that supports unified redirection;
   Figure 7 illustrates schematically an example of a PCEF suitable for implementing unified redirection;
   Figure 8 illustrates schematically an example of a first decision function suitable for implementing unified redirection; and
   Figure 9 illustrates schematically an example of a second decision function suitable for implementing unified redirection.

### Detailed Description

It is recognised here that, when enforcing decisions instructed by the PCRF and the OCS, it may be required to make a number of redirections of a user terminal during a single session. As described above, the OCS may redirect the user terminal to a web portal when a user's credit has been exhausted, and the PCRF may make a separate redirection to another web portal to notify a user of a change in the QoS that the network is providing.

These multiple redirections have a number of disadvantages. Firstly, the constant service interruptions caused by such redirections are likely to have a negative impact on the user's experience. Secondly, it is also likely that the different web portals (i.e. the web portal provided for the OCS and the web portal provided for the PCRF) will have been developed separately, by different departments, with different aims and objectives. As such, it is common for these different web portals to each have a different look and feel, possibly causing confusion to the user and negatively impacting the brand image of the operator. It is therefore desirable to minimize the number of separate redirections that occur whilst still providing the information and services supplied when redirecting the user terminal.

There will now be described a method by which separate redirections instructed by the OCS and PCRF respectively can be unified, thereby minimising the number of redirections that will occur during a session and ensuring that the network operator will make use of a single, combined web portal for these redirections.

The method involves, when a first decision function (i.e. either the PCRF or the OCS) has made an initial decision that requires redirection of a user terminal, the PCEF notifying a second decision function (i.e. the other of the PCRF and the OCS) of this decision. If the second decision function then makes a supplementary decision that would also require a redirection of the user terminal, or determines that such a decision was imminent, then it reports this to the PCEF. The PCEF then ensures that the user terminal is redirected to the location required by the initial decision, but that this redirection will also provide the information and/or services required by the supplementary decision of the second decision function.

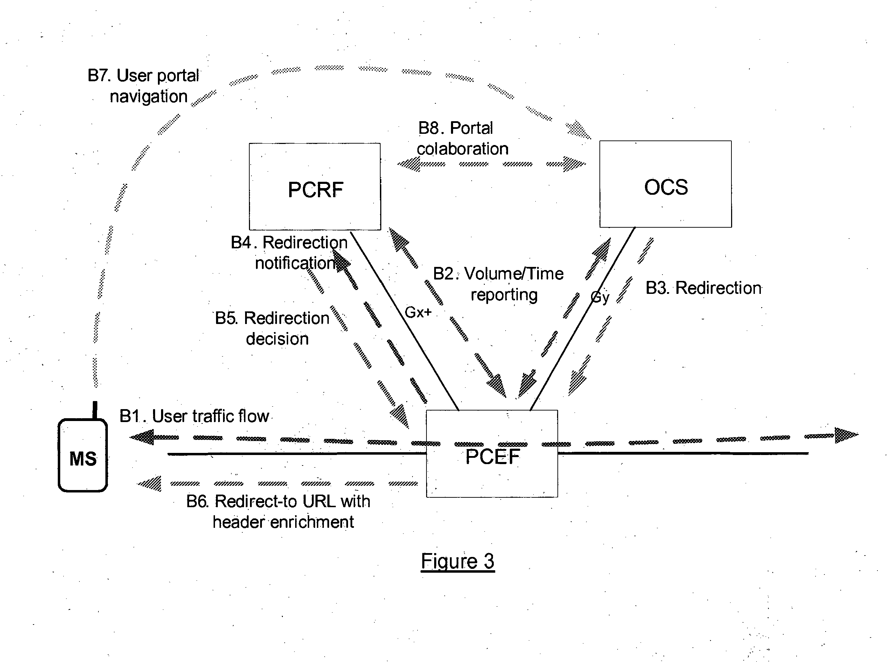

Figure 3 illustrates an example of the process of unifying a first redirection, required by an OCS, with a second redirection, required by a PCRF. In this example, and for the sake of simplicity, it is assumed that the PCEF functionality is embedded within a packet gateway (e.g. GGSN). The steps performed are as follows:
B1. The user accesses a service, such as browsing the internet, and traffic flows to and from the user terminal via the PCEF.
B2. The PCEF reports relevant details of the service usage to the OCS (for credit control) and the PCRF (for policy control).
B3. The OCS then decides that the user has exhausted their credit and prompts the PCEF to redirect the user terminal.
B4. The PCEF informs the PCRF of the redirection that has been triggered by the OCS.
B5. The PCRF decides that it would have imminently required a redirection of the user terminal, in order to provide a notification to the user, and informs the PCEF.
B6. The PCEF sends an instruction to the user terminal to redirect its web browser to a web portal of the OCS. The instruction includes the URL of the web portal, and a set of parameters for identifying the user and the session to the OCS. The instruction also provides a set of additional information that includes the URL of the PCRF and a set of parameters for identifying the user and the session to the PCRF.
B7. The user terminal is redirected to the web portal. The user terminal also forwards the parameters for identifying the user and the session to the OCS, together with the additional information included in the instruction received from the PCEF, to the web portal of the OCS.
B8. The web portal retrieves the information relating to the user and the user's session from the OCS. It also uses the additional information to contact the PCRF, which then supplies data relating to the notification that it is required to provide to the user. The web portal of the OCS then allows the user to purchase more credit for his account whilst also displaying the required notification.

This method provides a mechanism to combine two or more redirections into one, wherein the first decision function requesting a redirection gets, e.g. from the PCEF, information to contact a further decision function.

The redirection of the user terminal can be triggered in one of two ways. The decision function can either include the URL of the web portal in the response to the PCEF, or it can merely indicate the decision to the PCEF which can then initiate redirection of the user terminal to a URL configured at the PCEF. In addition, the PCEF may also be configured such that it will only check that a unified redirection is required in certain circumstances. For example, the PCEF may be configured to only notify the second decision function when certain URLs are provided by the first decision function, or unified redirection may only be required when using certain services. Additionally, some operators only require QoS degradation if the user is roaming. As such, it would not be necessary to perform unified redirection if the user is not roaming, as no service degradation will occur that will require the user to be notified.

The redirection of the user terminal can be achieved by sending a HTTP 3xx response from the PCEF to the user terminal. For example, the response may take the format:
HTTP/1.1 301 Moved Permanently
Location: http://www.operatorportal.com/refill.html

The 301 status code and the location field are defined in IETF RFC 2616. However, the PCEF must also include the additional information that the user terminal will provide to the first decision function to enable it to contact the second decision function. It may also be necessary to include the parameters to enable both the first decision function and the second decision function to identify the user and the session. For example, the HTTP response may need to include some or all of:
▪ a URL for a web portal of the OCS;
▪ an IMSI, MSISDN or other user identifier for identifying the user to the OCS;
▪ the Rating Group and Session ID for identifying the session to the OCS;
▪ a URL for a web portal of the PCRF;
▪ an IMSI, MSISDN or other user identifier for identifying the user to the PCRF;
▪ the Reporting Group and Session ID for identifying the session to the PCRF (note that this Reporting Group and Session ID are independent to the OCS Rating Group and Session ID); and
▪ a URL of the passive redirector (in this case, the URL of the PCRF portal)

The inclusion of this information can be achieved by either using additional standard headers (as defined in RFC 2616) in the HTTP 3xx response, or by using non-standard or proprietary headers in the response, provided that the user terminal and the first and second decision function can understand these headers.. For example, the HTTP response may include so-called "X-headers" to provide this information, such that the HTTP response sent by PCEF to the user terminal may take the format:
HTTP/1.1 301 Moved Permanently
Location: http://www.prepaidportal.com/refill.html
X-activeredir-MSISDN: +34699738495
X-activeredir-RatingG: 5
X-activeredir-SessionID: 5584
X-passiveredir-URL: http://www.qosportal.com/notif.html
X-passiveredir-MSISDN: +34699738495
X-passiveredir-ReportingG: 14
X-passiveredir-SessionID: 778

The "activedir" headers provide those parameters relating to the first decision function as the active redirector, whilst the "passiveredir" headers provide those parameters relating to the second decision function as the passive redirector. The user terminal will also be required to ensure that it inserts these headers into the redirected HTTP request towards the web portal of the first decision function.

The methods described above provide that when a unified redirection is required, the PCEF will redirect the user terminal to a web portal of the first decision function. This redirection will also cause the first decision function to contact the second decision function in order to combine the information and/or services that would have otherwise been provided by two separate redirections. In order to perform this functionality, the existing OCS and PCRF will both require a "plugin" to enable them to cooperate and provide a combined web portal. In doing so, this unified redirection minimises the number of redirections that will occur during a session and ensures that the web portals for the separate charging and policy control functions are managed in a unified way, thereby improving the user experience and the brand image of the network operator.

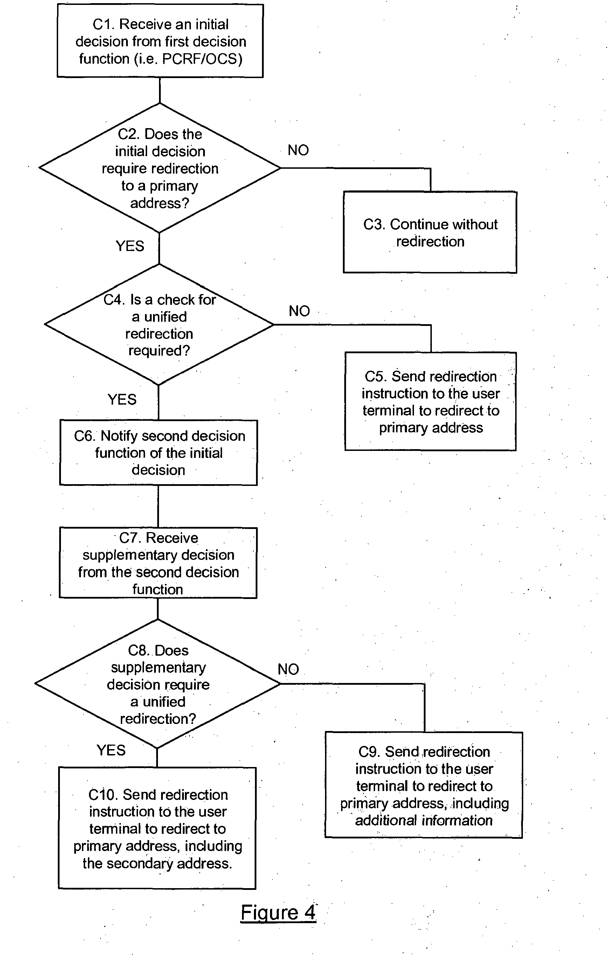

Figure 4 illustrates an example of the process implemented by a PCEF that supports unified redirection. The steps performed are as follows:
C1. The PCEF receives an initial decision from a first decision function (i.e. a PCRF or an OCS) relating to a user's session.
C2. The PCEF then determines if this initial decision requires redirection of the user's user terminal to a primary address. For example, the initial decision may include the primary address, thereby indicating that the PCEF should redirect the user terminal to this address. Alternatively, the PCEF may be configured to redirect the user terminal to an address configured at the PCEF, depending upon the decision and/or the reasons for the decision that are received from the first decision function.
C3. If the initial decision does not require a redirection of the user terminal, then the PCEF continues without redirecting the user terminal.
C4. If the initial decision does require a redirection of the user terminal, then the PCEF determines if it is required to check for a unified redirection. As previously described, the network operator may only require that the PCEF checks for a unified redirection in certain circumstances, for example, when using certain services.
C5. If it is not required to check for a unified redirection, then the PCEF continues to send a redirection instruction to the user terminal without contacting the second decision function.
C6. If it is required to check for a unified redirection, then the PCEF notifies a second decision function of the initial decision.
C7. The PCEF receives a supplementary decision from the second decision function.
C8. The PCEF then determines if the supplementary decision requires a unified redirection. For example, the supplementary decision may include a secondary address that the first decision function should communicate with when contacted by the user terminal. Alternatively, the PCEF may be configured to determine that a unified redirection is required, and the secondary address for that unified redirection, depending upon the supplementary decision and/or the reasons for the decision that are received from the second decision function.
C9. If the supplementary decision does not require a unified redirection, then the PCEF continues to send a redirection instruction to the user terminal, the instruction including the information required to redirect the user terminal to the primary address.
C10. If the supplementary decision does require a unified redirection, then the PCEF sends a redirection instruction to the user terminal. However, the instruction includes the information required to redirect the user terminal to the primary address, but also includes additional information in order to direct the first decision function to the secondary address, when contacted by the user terminal.

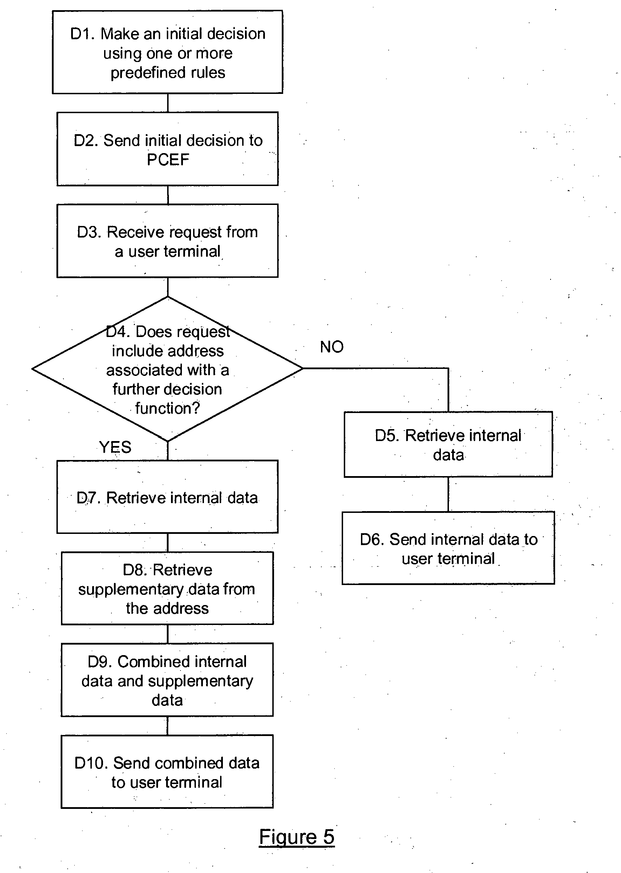

Figure 5 illustrates an example of the process implemented by a first decision function that supports unified redirection. The steps performed are as follows:
D1. The first decision function makes an initial decision relating to a user's session, using one or more predefined rules.
D2. The first decision function sends this initial decision to a PCEF. The initial decision may also include the reasons for the decision. Alternatively, the initial decision may include a primary address, thereby indicating that the PCEF should redirect the user terminal to this address.
D3. The first decision function then receives a request from the user's user terminal. For example, this request may be a HTTP Get request. The request may also include parameters for identifying the user and the session to the first decision function.
D4. The first decision function then determines if the request includes an address associated with a further decision function.
D5. If the request does not include an address associated with a further decision function, then the first decision function retrieves internal data relating to the initial decision.
D6. The first decision function then responds to the request by sending this internal data to the user terminal. For example, this internal data may provide the user terminal with information relating to their credit or account status, and provide an opportunity to purchase more credit, or may provide information relating to a change in the session.
D7. If the request does include an address associated with a further decision function, then the first decision function retrieves internal data relating to the initial decision.
D8. The first decision function then retrieves supplementary data from the address of the further decision function.
D9. The first decision function then combines the infernal data and the supplementary data.
D10. The first decision function then responds to the request by sending this combined data to the user terminal.

Further communication may then take place between the user terminal and the first decision function, and the first decision function and the further decision function, depending upon the nature of the initial decision and the supplementary decision, and upon the options available to the user.

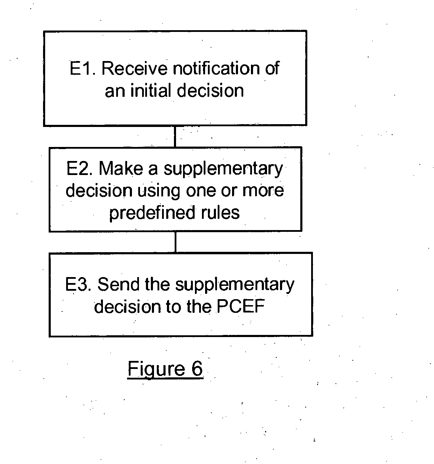

Figure 6 illustrates an example of the process implemented by a second decision function that supports unified redirection. The steps performed are as follows:
E1. The second decision function receives a notification, from a PCEF, of an initial decision made by a first decision function and relating to a user's session.
E2. The second decision function then makes a supplementary decision relating to the user's session, or determines that a supplementary decision was imminent, using one or more predefined rules.
E3. The second decision function then responds to the PCEF with this supplementary decision. The supplementary decision may also include the reasons for the decision. Alternatively, the supplementary decision may include an address, thereby indicating that to the PCEF that the second decision function requires a unified redirection.

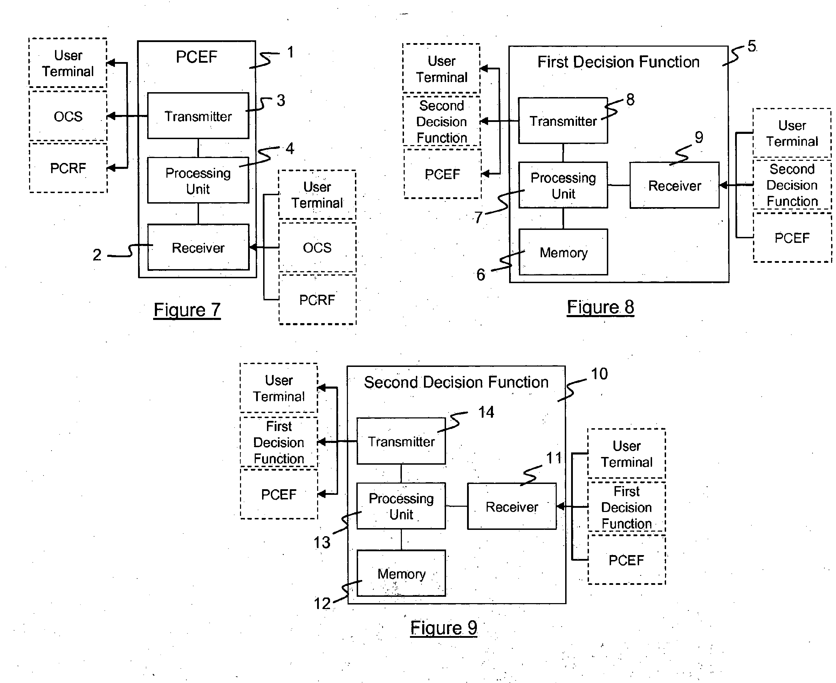

Figure 7 illustrates schematically an example of a PCEF 1 suitable for implementing the method described above. The PCEF 1 can be implemented as a combination of computer hardware and software. The PCEF 1 comprises a receiver 2, a transmitter 3 and a processing unit 4. The receiver 2 is suitable for receiving an initial decision from a first decision function and for receiving a supplementary decision from a second decision function. The transmitter 3 is suitable for notifying a second decision function of the initial decision and for sending the redirection instruction to the user terminal. The processing unit 4 is suitable for determining if the initial decision requires a redirection of a user interface of the user terminal to a primary address, for generating a redirection instruction to redirect the user interface to the primary address, and for determining if the supplementary decision requires that that the first decision function should communicate with a secondary address associated with the second decision function. If the supplementary decision does require that that the first decision function should communicate with a secondary address, the processing unit 4 also includes the secondary address in the instruction sent to the user terminal.

Figure 8 illustrates schematically an example of a first decision function 5 suitable for implementing the method described above. The first decision function 5 can be implemented as a combination of computer hardware and software. The first decision function 5 comprises a memory unit 6, a processing unit 7, a transmitter 8 and a receiver 9. The memory unit 6 is suitable for storing one or more predefined rules and for storing internal data relating to an initial decision. The processing unit 7 is suitable for using the one or more predefined rules to make the initial decision, for retrieving internal data from the memory unit and for combining internal data and supplementary data. The transmitter 8 is suitable for sending the initial decision to the PCEF and for sending the combined data to the user interface of the user terminal. The receiver 9 is suitable for receiving a data request from the user interface of the user terminal. The transmitter 8 and the receiver 9 are also suitable for retrieving supplementary data from the second decision function.

Figure 9 illustrates schematically an example of a second decision function 10 suitable for implementing the method described above. The second decision function 10 can be implemented as a combination of computer hardware and software. The second decision function 10 comprises a receiver 11, a memory unit 12, a processing unit 13 and a transmitter 14. The receiver 11 is suitable for receiving notification of an initial decision made by a first decision function from a PCEF: The memory unit 12 is suitable for storing one or more predefined rules. The processing unit 13 is suitable for using the one or more predefined rules to make a supplementary decision relating to control of the communication session. The transmitter 14 is suitable for sending the supplementary decision to the PCEF.

Currently, many of the nodes and servers in telecommunications systems are implemented by computer-based apparatuses. Examples are nodes and/or servers that can be configured to operate as the enforcing and/or decision functions described hereinbefore (i.e. the PCEF, PCRF, and OCS). Accordingly, the embodiments described above can comprise processes performed in computer-based apparatuses and programs for a computer-based apparatuses. The programs may be stored on any carrier capable of carrying the program. Therefore, a further embodiment of the invention comprises computer program products, or recording medium, storing computer interpretable instructions for causing a programmable computer to perform any of the methods described hereinbefore.

It will be appreciated by the person of skill in the art that various modifications may be made to the above-described embodiments without departing from the scope of the present invention as defined in the claims.

## Claims

1. A method of operating a Policy and Charging Enforcement Function to control a communication session of a user terminal, the method **characterised by**:
receiving (C1) an initial decision from a first decision function; the initial decision requiring a redirection of a user interface of the user terminal to a primary address associated with the first decision function;
notifying a second decision function of said initial decision;
receiving (C7) a supplementary decision from the second decision function, the supplementary decision requiring that that the first decision function should communicate with a secondary address associated with the second decision function; and
sending (C9, C10) a redirection instruction to the user terminal to redirect the user interface to said primary address, the instruction including said secondary address.

2. A method as claimed in claim 1, wherein the initial decision includes the primary address.

3. A method as claimed in claim 1, wherein the initial decision indicates one or more reasons for the decision, and the method further comprises:
using said one or more reasons to determine that the redirection is required, and to select said primary address.

4. A method as claimed in any preceding claim, wherein the supplementary decision includes the secondary address.

5. A method as claimed in any of claim 1 to 3, wherein the supplementary decision indicates one or more reasons for the decision, and the method further comprises:
using said one or more reasons to determine that the first decision function should communicate with a secondary address and to select said secondary address.

6. The method as claimed in any preceding claim, wherein the first decision function is provided by one of a Policy and Charging Rules Function and an Online Charging System and the second decision function is provided by the other of a Policy and Charging Rules Function and an Online Charging System.

7. A method of operating a decision function to control a communication session of a user terminal, the method **characterised by**:
using one or more predefined rules to make an initial decision (D1) relating to control of the communication session, the initial decision requiring a redirection of a user interface of the user terminal;
sending (D2) said initial decision to a Policy and Charging Enforcement Function;
receiving (D3) a data request from a user interface of the user terminal including an address associated with a further decision function;
retrieving internal data (D5, D7);
retrieving supplementary data (D8) from the further decision function using said address;
combining (D9) said initial data and said supplementary data; and
sending (D10) the combined data to the user interface of the user terminal.

8. A method as claimed in claim 7, wherein the data request also includes parameters for identifying the internal data and the supplementary data.

9. A method of operating a decision function to control a communication session of a user terminal, the method **characterised by**;
receiving (E1) from a Policy and Charging Enforcement Function notification of an initial decision made by a further decision function, the initial decision requiring a redirection of a user interface of the user terminal;
using one or more predefined rules to make a supplementary decision (E2) relating to control of the communication session; and
sending (E3) the supplementary decision to the Policy and Charging Enforcement Function.

10. An apparatus configured to operate as a Policy and Charging Enforcement Function (1), the apparatus **characterised by**:
a receiver (2) for receiving an initial decision from a first decision function;
a processing unit (4) for determining if the initial decision requires a redirection of a user interface of a user terminal to a primary address associated with the first decision function;
a transmitter (3) for notifying a second decision function of said initial decision;
a receiver (2) for receiving a supplementary decision from the second decision function;
a processing unit (4) for determining if the supplementary decision requires that that the first decision function should communicate with a secondary address associated with the second decision function, for generating a redirection instruction to redirect the user interface to the primary address, and, if the supplementary decision does require that that the first decision function should communicate with a secondary address, for including said secondary address in the instruction; and
a transmitter (3) for sending the redirection instruction to the user terminal.

11. An apparatus as claimed in claim 10, wherein the processing unit is further arranged to determine if the initial decision includes the primary address.

12. An apparatus as claimed in claim 10, wherein the processing unit is further arranged to determine if the initial decision indicates one or more reasons for the decision, and, if so, to use said one or more reasons to determine if the redirection is required and to select said primary address.

13. An apparatus as claimed in any of claims 10 to 12, wherein the processing unit is further arranged to determine if the supplementary decision includes the secondary address.

14. An apparatus as claimed in any of claims 10 to 12, wherein the processing unit is further arranged to determine if the supplementary decision indicates one or more reasons for the decision, and, if so, to use said one or more reasons to determine if the first decision function should communicate with a secondary address and to select said secondary address.

15. An apparatus configured to operate as a decision function (5) for controlling a communication session of a user terminal, the apparatus **characterised by**:
a memory unit (6) for storing one or more predefined rules;
a processing unit (7) for using the one or more predefined rules to make an initial decision relating to control of the communication session;
a memory unit (6) for storing internal data relating to said initial decision;
a transmitter (8) for sending said initial decision to a Policy and Charging Enforcement Function;
a receiver (9) for receiving a data request from the user interface of the user terminal including an address associated with a further decision function;
a processing unit (7) for retrieving internal data from the memory unit;
a transceiver (8, 9) for retrieving supplementary data from the further decision function using said address;
a processing unit (7) for combining said internal data and said supplementary data; and
a transmitter (8) for sending the combined data to the user interface of the user terminal.

16. An apparatus configured to operate as a decision function (10) for controlling a communication session of a user terminal, the apparatus **characterised by**:
a receiver (11) for receiving, from a Policy and Charging Enforcement Function, notification of an initial decision made by a further decision function, the initial decision requiring a redirection of a user interface of the user terminal;
a memory unit (12) for storing one or more predefined rules;
a processing unit (13) for using the one or more predefined rules to make a supplementary decision relating to control of the communication session; and
a transmitter (14) for sending the supplementary decision to the Policy and Charging Enforcement Function.

## Patentansprüche

1. Verfahren zum Betreiben einer Richtlinien- und Gebührendurchsetzungsfunktion zum Steuern einer Kommunikationssitzung eines Benutzerendgerätes, wobei das Verfahren **gekennzeichnet ist durch**:
Empfangen (C1) einer anfänglichen Entscheidung von einer ersten Entscheidungsfunktion; wobei die anfängliche Entscheidung eine Umleitung einer Benutzeroberfläche des Benutzerendgeräts zu einer mit der ersten Entscheidungsfunktion assoziierten primären Adresse erfordert;
Benachrichtigen einer zweiten Entscheidungsfunktion über die anfängliche Entscheidung;
Empfangen (C7) einer zusätzlichen Entscheidung von der zweiten Entscheidungsfunktion, wobei die zusätzliche Entscheidung verlangt, dass die erste Entscheidungsfunktion mit einer mit der zweiten Entscheidungsfunktion assoziierten sekundären Adresse kommuniziert; und
Senden (C9, C10) eines Umleitungsbefehls zu dem Benutzerendgerät, um die Benutzeroberfläche zu der primären Adresse umzuleiten, wobei der Befehl die sekundäre Adresse beinhaltet.

2. Verfahren nach Anspruch 1, wobei die anfängliche Entscheidung die primäre Adresse beinhaltet.

3. Verfahren nach Anspruch 1, wobei die anfängliche Entscheidung einen oder mehrere Gründe für die Entscheidung anzeigt und wobei das Verfahren ferner Folgendes beinhaltet:
Benutzen der ein oder mehreren Gründe, um festzustellen, dass die Umleitung erforderlich ist, und um die primäre Adresse zu wählen.

4. Verfahren nach einem vorherigen Anspruch, wobei die zusätzliche Entscheidung die sekundäre Adresse beinhaltet.

5. Verfahren nach einem der Ansprüche 1 bis 3, wobei die zusätzliche Entscheidung einen oder mehrere Gründe für die Entscheidung angibt und das Verfahren ferner Folgendes beinhaltet:
Benutzen der ein oder mehreren Gründe zum Feststellen, dass die erste Entscheidungsfunktion mit einer sekundären Adresse kommunizieren soll, und zum Wählen der sekundären Adresse.

6. Verfahren nach einem der vorherigen Ansprüche, wobei die erste Entscheidungsfunktion von einem aus einer Richtlinien- und Gebührenregelfunktion und einem Online-Gebührensystem bereitgestellt wird und die zweite Entscheidungsfunktion von dem jeweils anderen aus Richtlinien- und Gebührenregelfunktion und Online-Gebührensystem bereitgestellt wird.

7. Verfahren zum Betreiben einer Entscheidungsfunktion zum Steuern einer Kommunikationssitzung eines Benutzerendgeräts, wobei das Verfahren **gekennzeichnet ist durch**:
Anwenden von einer oder mehreren vordefinierten Regeln, um eine anfängliche Entscheidung (D1) in Bezug auf die Steuerung der Kommunikationssitzung zu fällen, wobei die anfängliche Entscheidung eine Umleitung einer Benutzeroberfläche des Benutzerendgeräts verlangt;
Senden (D2) der anfänglichen Entscheidung zu einer Richtlinien- und Gebührendurchsetzungsfunktion;
Empfangen (D3) einer Datenanforderung von einer Benutzeroberfläche des Benutzerendgeräts, die eine mit einer weiteren Entscheidungsfunktion assoziierte Adresse beinhaltet;
Abrufen von internen Daten (D5, D7);
Abrufen zusätzlicher Daten (D8) von der weiteren Entscheidungsfunktion unter Verwendung der Adresse;
Kombinieren (D9) der anfänglichen Daten und der zusätzlichen Daten; und
Senden (D10) der kombinierten Daten zur Benutzeroberfläche des Benutzerendgeräts.

8. Verfahren nach Anspruch 7, wobei die Datenanforderung auch Parameter zum Identifizieren der internen Daten und der zusätzlichen Daten beinhaltet.

9. Verfahren zum Betreiben einer Entscheidungsfunktion zum Steuern einer Kommunikationssitzung eines Benutzerendgeräts, wobei das Verfahren **gekennzeichnet ist durch**:
Empfangen (E1), von einer Richtlinien- und Gebührendurchsetzungsfunktion, einer Benachrichtigung über eine von einer weiteren Entscheidungsfunktion gefällte anfängliche Entscheidung, wobei die anfängliche Entscheidung eine Umleitung einer Benutzeroberfläche des Benutzerendgeräts erfordert;
Anwenden von einer oder mehreren vordefinierten Regeln zum Fällen einer zusätzlichen Entscheidung (E2) in Bezug auf die Steuerung der Kommunikationssitzung; und
Senden (E3) der zusätzlichen Entscheidung zu der Richtlinien- und Gebührendurchsetzungsfunktion.

10. Vorrichtung, die zum Arbeiten als Richtlinien- und Gebührendurchsetzungsfunktion (1) konfiguriert ist, wobei die Vorrichtung **gekennzeichnet ist durch**:
einen Empfänger (2) zum Empfangen einer anfänglichen Enscheidung von einer ersten Entscheidungsfunktion;
eine Verarbeitungseinheit (4) zum Ermitteln, ob die anfängliche Entscheidung eine Umleitung einer Benutzeroberfläche eines Benutzerendgeräts zu einer mit der ersten Entscheidungsfunktion assoziierten primären Adresse verlangt;
einen Sender (3) zum Benachrichtigen einer zweiten Entscheidungsfunktion über die anfängliche Entscheidung;
einen Empfänger (2) zum Empfangen einer zusätzlichen Entscheidung von der zweiten Entscheidungsfunktion;
eine Verarbeitungseinheit (4) zum Ermitteln, ob die zusätzliche Entscheidung verlangt, dass die erste Entscheidungsfunktion mit einer mit der zweiten Entscheidungsfunktion assoziierten sekundären Adresse kommuniziert, zum Erzeugen eines Umleitungsbefehls zum Umleiten der Benutzeroberfläche zu der primären Adresse, und wenn die zusätzliche Entscheidung verlangt, dass die erste Entscheidungsfunktion mit einer sekundären Adresse kommuniziert, zum Einschließen der sekundären Adresse in den Befehl; und
einen Sender (3) zum Senden des Umleitungsbefehls zu dem Benutzerendgerät.

11. Vorrichtung nach Anspruch 10, wobei die Verarbeitungseinheit ferner zum Ermitteln ausgelegt ist, ob die anfängliche Entscheidung die primäre Adresse beinhaltet.

12. Vorrichtung nach Anspruch 10, wobei die Verarbeitungseinheit ferner so ausgelegt ist, dass sie ermittelt, ob die anfängliche Entscheidung einen oder mehrere Gründe für die Entscheidung angibt, und wenn ja, die ein oder mehreren Gründe zum Ermitteln benutzt, ob die Umleitung nötig ist, und um die primäre Adresse zu wählen.

13. Vorrichtung nach einem der Ansprüche 10 bis 12, wobei die Verarbeitungseinheit ferner zum Ermitteln ausgelegt ist, ob die zusätzliche Entscheidung die sekundäre Adresse beinhaltet.

14. Vorrichtung nach einem der Ansprüche 10 bis 12, wobei die Verarbeitungseinheit ferner so ausgelegt ist, dass sie ermittelt, ob die zusätzliche Entscheidung einen oder mehrere Gründe für die Entscheidung angibt, und wenn ja, die ein oder mehreren Gründe zum Ermitteln benutzt, ob die erste Entscheidungsfunktion mit einer sekundären Adresse kommunizieren soll, und um die sekundäre Adresse auszuwählen.

15. Vorrichtung, die zum Arbeiten als Entscheidungsfunktion (5) zum Steuern einer Kommunikationssitzung eines Benutzerendgeräts konfiguriert ist, wobei die Vorrichtung **gekennzeichnet ist durch**:
eine Speichereinheit (6) zum Speichern von einer oder mehreren vordefinierten Regeln;
eine Verarbeitungseinheit (7) zum Benutzen der ein oder mehreren vordefinierten Regeln zum Treffen einer anfänglichen Entscheidung in Bezug auf die Steuerung der Kommunikationssitzung;
eine Speichereinheit (6) zum Speichern von internen Daten in Bezug auf die anfängliche Entscheidung;
einen Sender (8) zum Senden der anfänglichen Entscheidung zu einer Richtlinien- und Gebührendurchsetzungsfunktion;
einen Empfänger (9) zum Empfangen einer Datenanforderung von der Benutzeroberfläche des Benutzerendgeräts einschließlich einer mit einer weiteren Entscheidungsfunktion assoziierten Adresse;
eine Verarbeitungseinheit (7) zum Abrufen von internen Daten aus der Speichereinheit;
einen Transceiver (8, 9) zum Abrufen von zusätzlichen Daten von der weiteren Entscheidungsfunktion anhand der Adresse;
eine Verarbeitungseinheit (7) zum Kombinieren der internen Daten und der zusätzlichen Daten; und
einen Sender (8) zum Senden der kombinierten Daten zu der Benutzeroberfläche des Benutzerendgeräts.

16. Vorrichtung, die zum Arbeiten als Entscheidungsfunktion (10) zum Steuern einer Kommunikationssitzung eines Benutzerendgeräts konfiguriert ist, wobei die Vorrichtung **gekennzeichnet ist durch**:
einen Empfänger (11) zum Empfangen, von einer Richtlinien- und Gebührendurchsetzungsfunktion, einer Benachrichtigung über eine von einer weiteren Entscheidungsfunktion gefällte anfängliche Entscheidung, wobei die anfängliche Entscheidung eine Umleitung einer Benutzeroberfläche des Benutzerendgeräts verlangt;
eine Speichereinheit (12) zum Speichern von einer oder mehreren vordefinierten Regeln;
eine Verarbeitungseinheit (13) zum Benutzen der ein oder mehreren vordefinierten Regeln, um eine zusätzliche Entscheidung in Bezug auf die Steuerung der Kommunikationssitzung zu fällen; und
einen Sender (14) zum Senden der zusätzlichen Entscheidung zu der Richtlinien- und Gebührendurchsetzungsfunktion.

## Revendications

1. Procédé d'exploitation d'une fonction d'application de politiques et de facturation pour commander une session de communication d'un terminal d'utilisateur, le procédé étant **caractérisé par** les étapes ci-dessous consistant à :
recevoir (C1) une décision initiale en provenance d'une première fonction de décision ; la décision initiale exigeant une redirection d'une interface d'utilisateur du terminal d'utilisateur vers une adresse principale associée à la première fonction de décision ;
avertir une seconde fonction de décision de ladite décision initiale ;
recevoir (C7) une décision complémentaire en provenance de la seconde fonction de décision, la décision complémentaire exigeant que la première fonction de décision communique avec une adresse secondaire associée à la seconde fonction de décision ; et
envoyer (C9, C10) une instruction de redirection au terminal d'utilisateur, visant à rediriger l'interface d'utilisateur vers ladite adresse principale, l'instruction incluant ladite adresse secondaire.

2. Procédé selon la revendication 1, dans lequel la décision initiale comprend l'adresse principale.

3. Procédé selon la revendication 1, dans lequel la décision initiale indique une ou plusieurs raisons expliquant la décision, et le procédé comprend en outre l'étape ci-dessous consistant à :
utiliser ladite une ou lesdites plusieurs raisons en vue de déterminer que la redirection est requise, et de sélectionner ladite adresse principale.

4. Procédé selon l'une quelconque des revendications précédentes, dans lequel la décision complémentaire inclut l'adresse secondaire.

5. Procédé selon l'une quelconque des revendications 1 à 3, dans lequel la décision complémentaire indique une ou plusieurs raisons expliquant la décision, et le procédé comprend en outre l'étape ci-dessous consistant à :
utiliser ladite une ou lesdites plusieurs raisons en vue de déterminer que la première fonction de décision doit communiquer avec une adresse secondaire, et de sélectionner ladite adresse secondaire.

6. Procédé selon l'une quelconque des revendications précédentes, dans lequel la première fonction de décision est fournie par l'un des éléments parmi une fonction de règles de facturation et de politiques et un système de facturation en ligne, et la seconde fonction de décision est fournie par l'autre élément parmi une fonction de règles de facturation et de politiques et un système de facturation en ligne.

7. Procédé d'exploitation d'une fonction de décision pour commander une session de communication d'un terminal d'utilisateur, le procédé étant **caractérisé par** les étapes ci-dessous consistant à :
utiliser une ou plusieurs règles prédéfinies pour prendre une décision initiale (D1) connexe à la commande de la session de communication, la décision initiale exigeant une redirection d'une interface d'utilisateur du terminal d'utilisateur ;
envoyer (D2) ladite décision initiale à une fonction d'application de politiques et de facturation ;
recevoir (D3) une demande de données en provenance d'une interface d'utilisateur du terminal d'utilisateur, incluant une adresse associée à une fonction de décision supplémentaire ;
récupérer des données internes (D5, D7) ;
récupérer des données complémentaires (D8) à partir de la fonction de décision supplémentaire, en utilisant ladite adresse ;
combiner (D9) lesdites données initiales et lesdites données complémentaires ; et
envoyer (D10) les données combinées à l'interface d'utilisateur du terminal d'utilisateur.

8. Procédé selon la revendication 7, dans lequel la demande de données inclut également des paramètres pour identifier les données internes et les données complémentaires.

9. Procédé d'exploitation d'une fonction de décision pour commander une session de communication d'un terminal d'utilisateur, le procédé étant **caractérisé par** les étapes ci-dessous consistant à :
recevoir (E1), à partir d'une fonction d'application de politiques et de facturation, une notification d'une décision initiale prise par une fonction de décision supplémentaire, la décision initiale exigeant une redirection d'une interface d'utilisateur du terminal d'utilisateur ;
utiliser une ou plusieurs règles prédéfinies en vue de prendre une décision complémentaire (E2) connexe à la commande de la session de communication ; et
envoyer (E3) la décision complémentaire à la fonction d'application de politiques et de facturation.

10. Appareil configuré de manière à fonctionner en qualité de fonction d'application de politiques et de facturation (1), l'appareil étant **caractérisé par** :
un récepteur (2) destiné à recevoir une décision initiale en provenance d'une première fonction de décision ;
une unité de traitement (4) destinée à déterminer si la décision initiale exige une redirection d'une interface d'utilisateur d'un terminal d'utilisateur vers une adresse principale associée à la première fonction de décision ;
un émetteur (3) destiné à avertir une seconde fonction de décision de ladite décision initiale ;
un récepteur (2) destiné à recevoir une décision complémentaire en provenance de la seconde fonction de décision ;
une unité de traitement (4) destinée à déterminer si la décision complémentaire exige que la première fonction de décision communique avec une adresse secondaire associée à la seconde fonction de décision, à générer une instruction de redirection visant à rediriger l'interface d'utilisateur vers l'adresse principale, et, si la décision complémentaire exige que la première fonction de décision communique avec une adresse secondaire, à inclure ladite adresse secondaire dans l'instruction ; et
un émetteur (3) destiné à envoyer l'instruction de redirection au terminal d'utilisateur.

11. Appareil selon la revendication 10, dans lequel l'unité de traitement est en outre agencée de manière à déterminer si la décision initiale inclut l'adresse principale.

12. Appareil selon la revendication 10, dans lequel l'unité de traitement est en outre agencée de manière à déterminer si la décision initiale indique une ou plusieurs raisons expliquant la décision, et, le cas échéant, à utiliser ladite une ou lesdites plusieurs raisons en vue de déterminer si la redirection est requise et de sélectionner ladite adresse principale.

13. Appareil selon l'une quelconque des revendications 10 à 12, dans lequel l'unité de traitement est en outre agencée de manière à déterminer si la décision complémentaire inclut l'adresse secondaire.

14. Appareil selon l'une quelconque des revendications 10 à 12, dans lequel l'unité de traitement est en outre agencée de manière à déterminer si la décision complémentaire indique une ou plusieurs raisons expliquant la décision, et, le cas échéant, à utiliser ladite une ou lesdites plusieurs raisons en vue de déterminer si la première fonction de décision doit communiquer avec une adresse secondaire, et de sélectionner ladite adresse secondaire.

15. Appareil configuré de manière à fonctionner en qualité de fonction de décision (5) pour commander une session de communication d'un terminal d'utilisateur, l'appareil étant **caractérisé par** :
une unité de mémoire (6) destinée à stocker une ou plusieurs règles prédéfinies ;
une unité de traitement (7) destinée à utiliser ladite une ou lesdites plusieurs règles prédéfinies en vue de prendre une décision initiale connexe à la commande de la session de communication ;
une unité de mémoire (6) destinée à stocker des données internes connexes à ladite décision initiale ;
un émetteur (8) destiné à envoyer ladite décision initiale à une fonction d'application de politiques et de facturation ;
un récepteur (9) destiné à recevoir une demande de données en provenance de l'interface d'utilisateur du terminal d'utilisateur, incluant une adresse associée à une fonction de décision supplémentaire ;
une unité de traitement (7) destinée à récupérer des données internes à partir de l'unité de mémoire ;
un émetteur-récepteur (8, 9) destiné à récupérer des données complémentaires à partir de la fonction de décision supplémentaire, en utilisant ladite adresse ;
une unité de traitement (7) destinée à combiner lesdites données internes et lesdites données complémentaires ; et
un émetteur (8) destiné à envoyer les données combinées à l'interface d'utilisateur du terminal d'utilisateur.

16. Appareil configuré de manière à fonctionner en qualité de fonction de décision (10) pour commander une session de communication d'un terminal d'utilisateur, l'appareil étant **caractérisé par** :
un récepteur (11) destiné à recevoir, à partir d'une fonction d'application de politiques et de facturation, une notification d'une décision initiale prise par une fonction de décision supplémentaire, la décision initiale exigeant une redirection d'une interface d'utilisateur du terminal d'utilisateur ;
une unité de mémoire (12) destinée à stocker une ou plusieurs règles prédéfinies ;
une unité de traitement (13) destinée à utiliser une ou plusieurs règles prédéfinies en vue de prendre une décision complémentaire connexe à la commande de la session de communication ; et
un émetteur (14) destiné à envoyer la décision complémentaire à la fonction d'application de politiques et de facturation.
